## Europäisches Patentamt

## European Patent Office

## Office européen des brevets

(19)

(11) Publication number: **0 204 040**

**A1**

(12)

# EUROPEAN PATENT APPLICATION

(21) Application number: **85303970.9**

(22) Date of filing: **05.06.85**

(51) Int. Cl.⁴: **A 61 G 5/00**

(43) Date of publication of application:
**10.12.86 Bulletin 86/50**

(84) Designated Contracting States:
**AT BE CH DE FR GB IT LI LU NL SE**

(71) Applicant: **Quadra Wheelchairs, Inc.**

**California(US)**

(72) Inventor: **Strauss, Herbert**
**688 West Lynnwood Drive**
**Thousand Oaks California 91360(US)**

(72) Inventor: **Linder, George**
**17176 Avenida Herraduro**
**Pacific Palisades California 90272(US)**

(74) Representative: **Coxon, Philip et al,**
**Eric Potter & Clarkson 14 Oxford Street**
**Nottingham NG1 5BP(GB)**

(54) Brake device for wheelchairs.

(57) A brake device (A) for use with wheelchairs (W). The brake device (A) comprises a bracket or other mounting member (30) for mounting the device (A) to a wheelchair frame (10). The device (A) also comprises a lever arm (48) which is shiftable to a wheel locking position in which a brake tab (68) is moved into engagement with a wheel (20) of a wheelchair (W) to lock the wheel (20) against further rotation. This lever arm (48) is also capable of being shifted to a reverse or non-locking position so that it moves the tab (68) out of engagement with the wheelchair driving wheel (20) and to a position where it cannot be engaged with the driving wheel (20) to permit free-wheeling movement thereof. The brake device (A) is constructed so that the wheel locking tab (68) is capable of shifting from a plane in which it is substantially parallel with respect to the plane of movement of the lever arm (48) in the non-locking position to the locking position where the tab (68) is parallel to the axis of rotation of a wheelchair rear wheel (20). A moveable shaft (46) which carries the locking tab (68) is shiftable by a cam (52) on the lever arm (48). Movement of this lever arm (48) causes axial movement of the shaft (46) and a resultant rotational movement of the shaft (46). This rotational movement is caused by a guide pin (76) which moves in a slot (78) to cause rotation of the shaft (46) and a resultant movement of the brake locking tab (68) between the locking position and the non-locking position.

FIG. 2

## BRAKE DEVICE FOR WHEELCHAIRS

This invention relates in general to certain new and useful improvements in brake devices for use with wheelchairs, and more particularly, to wheelchairs and brake devices used therewith which permit a brake arm to be shifted between locking and non-locking positions.

Generally, most wheelchairs provide a simple brake mechanism in which a brake tab is designed to be shifted into frictional locking engagement with a wheel of the wheelchair, as for example, a rear wheel, when a lever arm on the brake mechanism is shifted into a locking position. The tab can be removed from engagement with the wheel by shifting the hand engageable lever to another position when it is desired to permit the wheelchair to be propelled. In either case, the locking tab on the brake mechanism is typically located in a plane which is perpendicular to the plane of rotation of the wheel. Consequently, while the brake mechanism is desirable for use in normal transport, it may create an interference when the user of the wheelchair attempts to use the latter in sports and other athletic activities, since it creates an obstruction with potential resultant injury to the user of the wheelchair.

It is, therefore, one of the primary objects of the present invention to provide a brake device which includes a brake locking tab which is capable of moving in response to the shifting movement of a lever arm and in a plane which is generally perpendicular to the plane of movement of the lever arm.

It is another object of the present invention to provide a brake device of the type stated in which the brake locking tab is normally in a position where it is out of the way of the user's hand when in the non-locking position and not likely to be contacted by the hand of the user in such position.

Having thus described the invention in general terms, reference will now be made to the accompanying drawings in which:

FIGURE 1 is a side elevational view of a wheelchair, with a wheel brake device forming the subject matter of the present invention;

FIGURE 2 is a side elevational view, partially broken away and in section, of the wheel brake device;

FIGURE 3 is a side elevational view, partially broken away and in section, of the wheel brake device in the wheel locking mode;

FIGURE 4 is a top plan view of the wheel brake device in the unlocked mode;

FIGURE 5 is a top plan view of the wheel brake device in the wheel locking mode;

FIGURE 6 is a front elevational view of the brake device, and showing the brake device in an unlocked mode;

FIGURE 7 is a rear elevational view of the wheel brake device in the unlocked mode;

FIGURE 8 is a front elevational view of an alternate embodiment of the brake device, similar to Figure 6, and showing the brake device in a locking mode; and

FIGURE 9 is a front elevational view, partially broken away and in section of still another embodiment of the brake device in accordance with the present invention.

-4-

Referring now in more detail and by reference characters to the drawings which illustrate a practical embodiment of the present invention, W designates a wheelchair having a main frame 10 and a seat structure generally designated by reference numeral 12. The main frame 10 is comprised of at least a pair of spaced apart generally horizontally located longitudinally extending upper frame bars 14. In the embodiment as illustrated, the main frame 10 also comprises a pair of spaced apart lower generally horizontally located longitudinally extending frame bars 16. The remaining portions of the frame are conventional in construction and are therefore, not described in detail herein. The same holds true with respect to the seat structure 12.

Mounted on the forward ends of each of the lower frame bars 16 are a pair of front wheel assemblies 18. Further, and mounted on the rearward portion of the main frame 10 are a pair of rear wheel assemblies 20 comprising rims 22 having inflatable tires 24 and hand engagable rings 26 for engagement by the hands of a user to propel the wheelchair. The wheel assemblies and the means for mounting them to the wheelchair are also conventional.

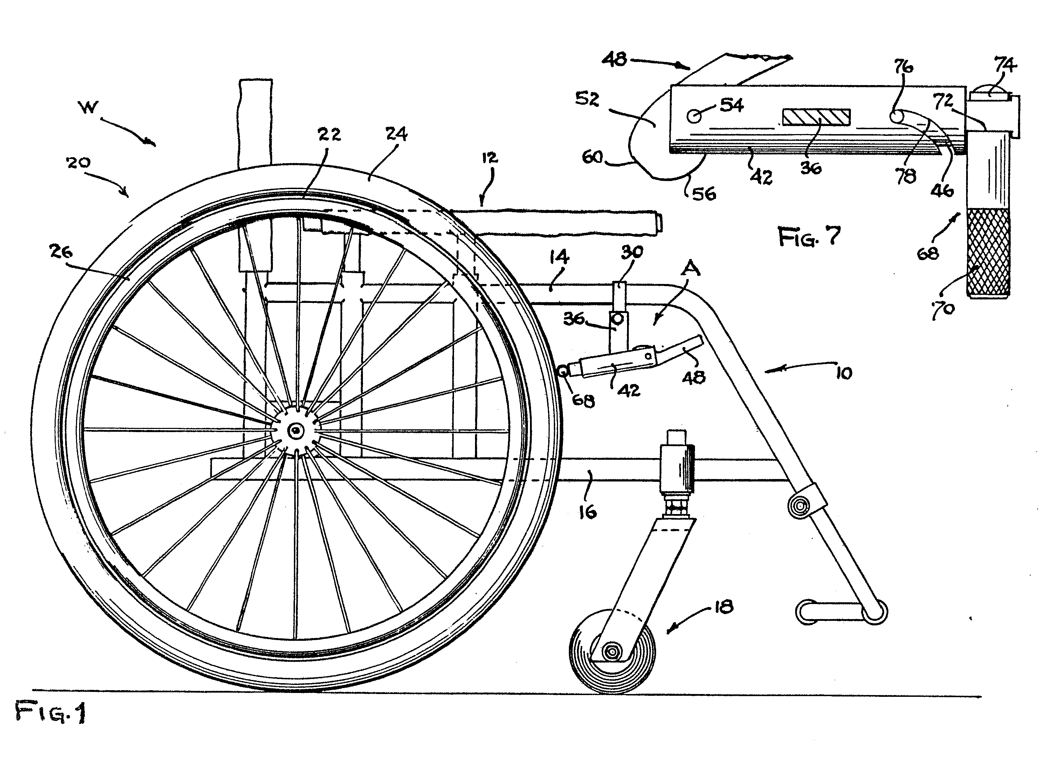

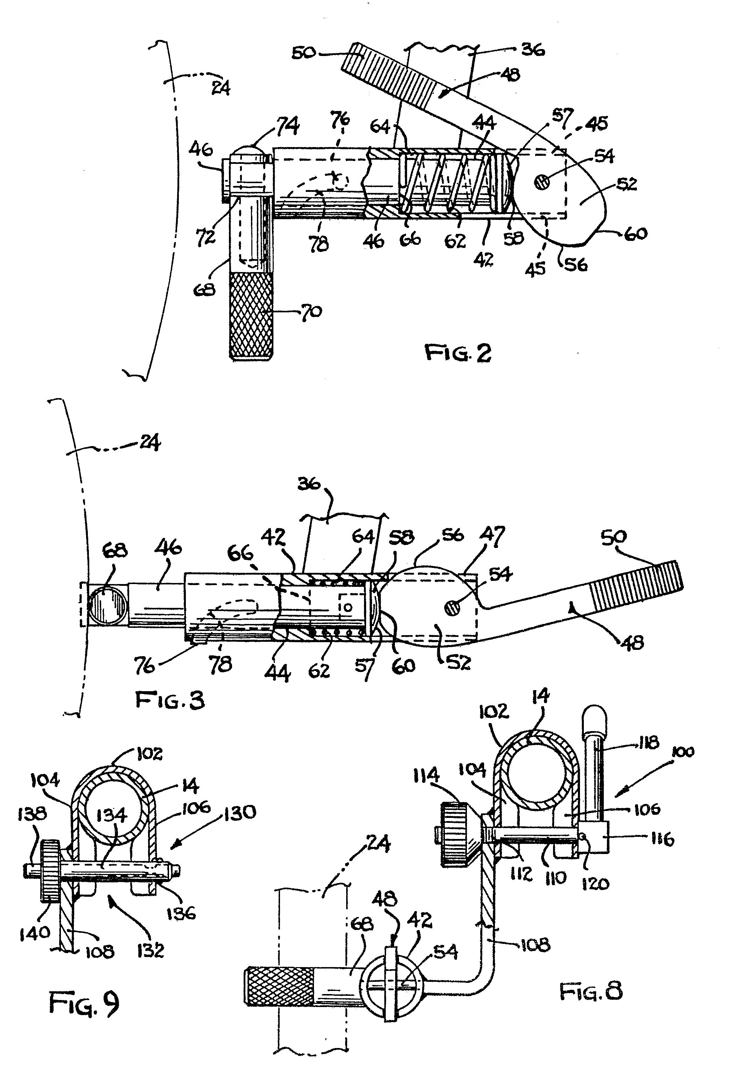

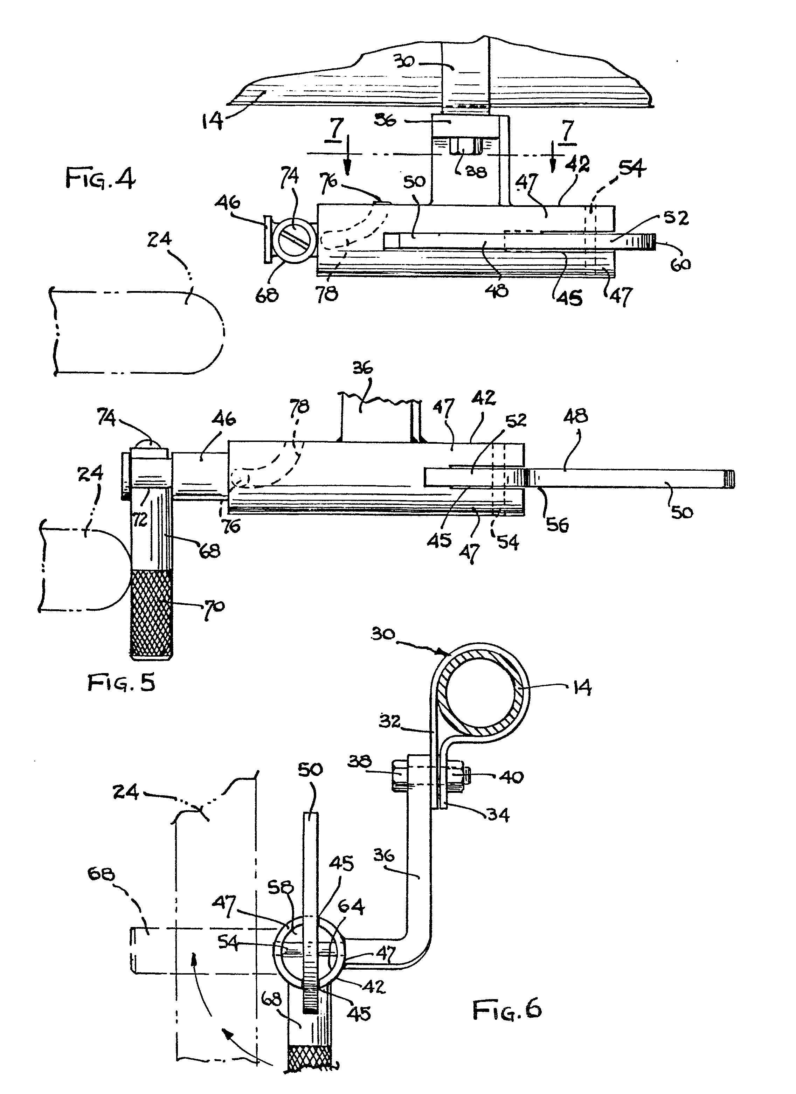

A wheel brake device A forming part of the present invention is shown as used on the wheelchair W in Figure 1. This wheel brake device A is also more fully illustrated in Figures 2-7 of the drawings. The wheel brake device A generally comprises a brake mounting means such as a clamp 30 for mounting the wheel brake device to the frame of the wheelchair. In this case, it can be observed that the clamp 30, includes a first downwardly depending leg 32 and a spaced apart second downwardly depending leg 34 (see Figure 6) which are effectively clamped about the frame bar 14. An L-shaped bracket 36 is secured to the clamp and carries the brake device A. A bolt 38 extends through apertures in the legs 32 and 34 and bracket 36 and is provided on its rear surface with a releasable nut 40. In this way, the clamp 30 and bracket 36 can be released from a position on a frame bar of the wheelchair and shifted to a different selected position. Furthermore, by merely releasing and partially removing the bolt 38, it is possible to easily and conveniently remove the entire brake device A from the wheelchair by lifting the clamp 30 off of the frame bar of the wheelchair.

Mounted on the bracket 36 is an outer elongate tubular housing 42 and which is adapted for approximately horizonal disposition when mounted on the wheelchair W. The housing 42 is actually offset from a true horizontal position by about an angle of about 15 degrees, so that a locking tab hereinafter described will be horizontally disposed in a locking position. The outer housing 42 is provided with an axially extending centrally located bore 44 and axially shiftably located within the bore 44 is a shaft 46 which is shiftable from a retracted position as shown in Figure 2 and which represents a non-locking position to an extended position, as shown in Figure 3 and which represents a locking position. Since the shaft 46 is projected rearwardly when extended, the extended position of Figure 3 is a rearward position and the retracted position of Figure 2 is a forward position.

The housing 42 is provided with upper and lower vertically aligned slots 45 to effectively divide the forward end of the

**0204040**

housing into a pair of spaced apart housing flanges 47. Mounted within the slots 45 formed by the pair of spaced apart housing flanges 47 at the forward end of the housing 44 is a manually engagable lever arm 48 which has a handle portion 50 at the outer end thereof. At its opposite end, ·the lever arm 48 is integrally provided with a cam 52. The lever arm and integrally formed cam 52 are mounted on the housing flanges 47 and within the slots 46 by means of a pivot pin 54. The cam 52 is provided with an arcuate camming surface 56 which engages an arcuately shaped face 57 of enlarged head 58 on the forward end of the shaft 46. Further, the arcuate camming surface 56 merges into a so-called "flat" 60 which serves to hold the shaft 46 in a locking position when the lever arm 50 is pulled outwardly and forwardly to the locking position, as shown in Figures 3 and 5.

A compression spring 62 is located within a rearwardly located bore section 64 in the housing 42 and is captured between a shoulder 66 in the housing and the enlarged head 58. In this way, the compression spring 62 will normally bias the shaft 46 forwardly or inwardly within the housing to the non-locking position. Further, it can be observed, by reference to Figure 3, when the lever arm 48 is pulled forwardly to the locking position, it will bias the shaft 46 rearwardly against the action of the compression spring 64.

Due to the profile of the camming surface 56, it can be observed that if the lever arm 48 is not pulled all the way to the locking position, as shown in Figures 3 and 5, the compression spring 62 will bias the shaft 46 forwardly to the

**0204040**

retracted position thereby causing the shaft to move to the non-locking position and returning the lever arm 48 back to the non-locking position. Contrarywise, if the lever arm is pulled to the full locking position, the flat 60 will engage the head 58 so that the lever arm 48 is almost in parallel arrangement with the shaft 56. In this way, the compression spring 62 is incapable of biasing the lever arm 48 to the non-locking position and the entire brake device will remain in the locked position, at least until the lever arm 48 is manually released from the locking position.

Mounted on a rearward end of the shaft is a brake locking arm, or so-called "locking tab" 68 which is shiftable from a non-locking position, as illustrated in Figures 2 and 6, to a locking position, as illustrated in Figures 3, and 5. When in the non-locking position, it can be observed that the locking arm 68 is essentially vertically disposed and in a plane which is generally parallel to the plane of rotation of a rear wheel of the wheelchair. However, when in the locking position, the locking arm 68 has moved through an arc of approximately 90 degrees so that it is generally perpendicularly located with respect to the plane of rotation of the wheel.

The locking arm 68 is in the form of a cylindrically shaped rod and is provided with a roughened or knurled surface 70 on the outer end. When the locking arm is in the locking position, the knurled surface 70 on the arm 68 will engage the tread of the tire 24 of the wheelchair and thereby retentively engage the tire and prevent further rotation of the rear wheel. The locking arm 68 is retained in a milled portion 72 of the shaft 46 by means of a bolt 74 which extends through the milled portion 72 of the shaft and into the locking arm, in the manner as illustrated in Figure 2.

Extending radially from the shaft 46 and being moveable therewith is a guide pin 76 which is moveable in a guide slot 78 formed within the housing 42. It can be observed that when the lever arm 48 is moved to the locking position and the shaft 46 is moved axially to the locking position, the guide pin 76 will move rearwardly in a helical path until the locking pin extends laterally with respect to a side of the housing 42, in the manner as illustrated in Figure 3. Further, it can be observed that the shaft 46 will rotate due to the movement of the guide pin 76 in the guide slot 78. This rotation will cause the locking tab 68 to move from the non-locking position to the locked position. When the lever arm 48 is permitted to move back to the non-locking position, the shaft 46 will be shifted forwardly, e.g. retracted, to the non-locking position and the movement of the guide pin 76 within the guide slot 78 will simulataneously cause rotation of the shaft 46 and hence movement of the brake arm to the non-locking position.

It is also possible to provide a quick release mounting mechanism 100 on the brake device of the present invention, as shown in Figure 8. The quick release mechanism 100 comprises a generally inverted U-shaped band clamp 102 having depending lower ends 104 and 106 and which clamp 102 is adapted to extend over one of the frame bars 14 forming part of the wheelchair. A depending bracket 108 is welded or otherwise rigidly secured to one of the lower ends 104 and serves as a mounting plate for the housing 42.

Extending between the bracket 108 and the lower portion of the leg 106 of the clamp 102 is a quick release bolt 110, or so-called "quick release lock bolt". The bolt 110 is provided with a threaded end 112 which extends through the lower end 104. On one end a nut 114 is threadedly secured to the threaded end 112. At its opposte end a fitting 116 having an outwardly extending arm 118 is rigidly secured to the bolt 110 by means of a pin 120. The threaded end 112 fits within the nut 114 in such manner that a small rotational twist of the shaft 110 will cause sufficient extension between the fitting 116 and nut 114 to permit movement of the clamp 102. This can be accomplished by mere movement of the handle 118 through a small arcuate path.

It is possible to provide another quick release mounting mechanism 130 on the brake device of the present invention, as shown in Figure 9. The quick release mechanism 130 comprises a generally inverted U-shaped band clamp 102 having depending lower ends 104 and 106 and which clamp 102 is adapted to extend over one of the frame bars 14 forming part of the wheelchair. A depending bracket 108 is welded or otherwise rigidly secured to one of the lower ends 104 and serves as a mounting plate for the housing 42.

Extending between the bracket 108 and the lower portion of the leg 106 of the clamp 102 is a quick release bolt, or so-called "quick release locking bolt 132". This quick release bolt 132 includes a shaft 134 which extends through apertures in the bracket 108 and in the legs 104 and 106. The shaft is hollow and generally carries a pair of detent balls 136 which extend outwardly to engage an outer face of the leg 106. In this way, the shaft 134 is retained in its fixed position. A finger engagable pin 138 extends outwardly of an enlarged head 140 and is capable of dis-engaging the detent balls 136. When the pin 138 is pushed inwardly, the detent balls 136 will fall into a recess formed in the pin (not shown) and thereby permit the removal of the shaft 134.

CLAIMS

1. A wheel brake device for use with a wheelchair, said brake device comprising:

a) brake mounting means for mounting the brake device to a frame of a wheelchair,

b) a lever means pivotally mounted with respect to said mounting means and capable of being pivotally moveable with respect thereto from a wheel locking position to a non-locking position,

c) a wheel engaging arm capable of moving through an arcuate path from a non-locking position where the arm cannot engage a wheel of a wheelchair to a locking position angularly located with respect to the locking position and engaging said wheel to prevent rotation thereof when the lever means is in a locking position,

d) a shaft carrying said wheel engaging arm and being rotatable to enable said arm to move through said arcuate path, and

e) rotation effecting means for rotating said shaft in response to movement of said lever arm so that said shaft is rotated to cause said arm to be shifted to the locking position where it is capable of being engagable with the wheel when the lever means is shifted to the wheel locking position, and to the non-locking position in which said arm is located in a plane where it cannot engage said wheel when the lever means is shifted to the non-locking position and where said arm is not likely to be contacted by a hand of a user when the lever means is in the non-locking position.

2.    The wheel brake device of Claim 1 further characterized in that said lever means is a hand engagable elongate lever arm.

3.    The wheel brake device of Claim 2 further characterized in that said lever arm is coupled to said shaft by a camming means.

4.    The wheel brake device of Claim 3 further characterized in that said camming means causes said shaft to be shifted axially when said lever arm is shifted between the locking and the non-locking position.

5.    The wheel brake device of Claim 4 further characterized in that said rotation effecting means is operable when said shaft is shifted axially.

6.    The wheel brake device of Claim 5 further characterized in that said rotation effecting means comprises a pin extending from said shaft and which is moveable through an arcuate slot to cause rotation of said shaft when axially shifted.

7. The wheel brake device of Claim 2 further characterized in that said shaft is disposed in a housing and is axially shiftable in said housing.

8. The wheel brake device of Claim 7 further characterized in that said lever arm is pivotally mounted on said housing.

9. The wheel brake device of Claim 1 further characterized in that said brake mounting means is a clamp disposed on a frame bar of a wheelchair frame and being retained in a desired position thereon.

10. The wheel brake device of Claim 1 further characterized in that said wheel engaging arm is located in the non-locking position where it is parallel to the plane of rotation of the wheel, and in a locking position which is approximately perpendicularly disposed to the non-locking position so that it is approximately perpendicular to the plane of rotation of the wheel and approximately parallel to the axis of rotation of the wheel.

11. The wheel brake device of Claim 1 further characterized in that said mounting means comprises a quick-release mounting means having a member manually shifted through a relatively small distance to retain or release said brake device from a fixed position on a wheelchair.

12. The wheel brake device of Claim 1 used with wheelchair comprising:

a)   a wheelchair frame,

b)   a pair of spaced apart rear wheels operatively mounted on said frame, and

c)   a pair of diametrically smaller front wheels operatively mounted on said frame.

Fig. 7

Fig. 1

2/3

0204040

FIG. 2

FIG. 3

FIG. 9

FIG. 8

FIG.4

FIG.5

FIG.6

0204040
Application number

EUROPEAN SEARCH REPORT

European Patent
Office

EP 85 30 3970

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 515 123 (ORTOPEDIA GmbH)  <br> * Page 5, lines 5-37; page 6, lines 1-29; claims; figures * | 1-4,7-9,11 | A 61 G 5/00 |
| A | DE-A-2 532 485 (MEYER) <br> * Claims; figures * | 1 | |
| A | GB-A-1 122 983 (BIDDLE) <br> * Page 4, lines 8-50; figure 4 * | 1 | |
| A | DE-A-3 108 676 (HAUENSTEIN) <br> * Abstract; figure * | 1 | |

TECHNICAL FIELDS
SEARCHED (Int. Cl.4)

A 61 G
B 62 B

The present search report has been drawn up for all claims

| Place of search | Date of completion of the search | Examiner |
|---|---|---|
| THE HAGUE | 03-02-1986 | BAERT F.G. |